# EUROPEAN PATENT APPLICATION

(11) **EP 1 244 026 A1**
(43) Date of publication of application: **25.09.2002**
(21) Application number: 00985963.8
(22) Date of filing: 27.12.2000
(51) Int. Cl.: G06F 17/30

(54) **WEB SITE SEARCH SYSTEM AND STORAGE FOR DATABASE FOR WEB SITE SEARCH**

(30) Priority: 27.12.1999 JP 37155599
(71) Applicant: Hino, Yasuhiro, Sendai-Shi, Miyagi 981-0904 (JP)
(72) Inventor: Hino, Yasuhiro, Sendai-Shi, Miyagi 981-0904 (JP)
(74) Representative: Stevens, Jason Paul
(86) International application number: JP0009338
(87) International publication number: WO01048635

(57) **Abstract**

An object of the present invention is to provide a Web site search system capable of efficiently searching for a Web site containing information limited to a local area.

The system comprises search code receiving means (4) for receiving from an information terminal (3) a search code data containing at least one of an area code specifying an area and a category code specifying an item other than the area; search means (6) for searching, when the search code receiving means has received the search code data containing the area code only, for a Web site containing the area code and the category code received previously, and for searching, when the search code receiving means has received the search code data containing the category code only, for a Web site containing the category code and the area code previously received; and information data transmitting means (7) for transmitting information data contained in the Web site that the search means has searched for, to information terminal (3).

## Description

### TECHNICAL FIELD

The present invention relates to a Web site search system for searching for a Web site having a search code specified.

### BACKGROUND ART

Recently, various Web sites are opened and a user of the information terminal such as a personal computer can easily get information from the Web site by using Browser.

However, there are so many Web sites on the Internet, and the user cannot easily identify URL (uniform resource locator) of the Web site providing the necessary information.

To cope with this, various research engines are used for researching a Web site according to a research keyword specified by the user. However, when these research engines are actually used, for one keyword entry, generally a plenty of Web site information items are displayed, and the user should further specify a keyword to reduce the research range. After repeating such a search process many times, there is a case that it is found that the corresponding Web site does not exist.

The inventors of the present invention have found that the search efficiency is especially bad when utilizing the conventional search engine for obtaining information limited to a particular area. That is, when a user of the personal computer accesses a site of the search engine, the display screen shows a search engine keyword setting screen. However, there is only one keyword entry section, and the user should enter all the search conditions for each time performing search.

For example, when the user searches for a restaurant open at midnight in the vicinity of his/her home (Area A), the user firstly enters keywords "Area A Λ open at midnight Λ restaurant" for Web site search. If the Web site does not hit, the user enters Area B adjacent to Area A and enters keywords "Area B Λ open at midnight Λ restaurant" for Web site search. If this does not hit, either, the user enters Area C instead of Area B. Thus, the user should continue to enter keywords for a long time. Thus, search efficiency has been very bad.

### DISCLOSURE OF THE INVENTION

The first embodiment of the present invention comprises search code reception means for receiving a search code data containing at least one of an area code specifying an area or a category code specifying other than the area as a Web site search code from an information terminal connected via Internet, search means for starting a Web site search upon reception of the search code data by the search code reception means, and when the search code data including both of the area code and the category code is received, searching for a Web site having the received area code and category code, and when the search code data including the area code only is received, searching for a Web site having the area code and the previously received category code, and information data transmission means for transmitting Web site information data searched by the search means to the information terminal.

According to the present invention, when the search means has received the search code data including the area code only, the search means searches for a Web site having this area code and the category code received previous time. For this, the information terminal once transmits the search code data including the category code and after that transmits the search code data including the area code only, thereby easily instructing the Web site search means to search for a Web site having the same category while changing the search area.

The second embodiment of the present invention comprises search code reception means for receiving a search code data containing at least one of an area code specifying an area and a category code specifying other than the area as a Web site search code from an information terminal connected via Internet, search means for starting a Web site search upon reception of the search code data by the search code reception means, and when the search code data including both of the area code and the category code is received, searching for a Web site having the received area code and category code, and when the search code data including the category code only is received, searching for a Web site having the category code and the previously received area code, and information data transmission means for transmitting a Web site information data searched by the search means to the information terminal.

According to the present invention, the information terminal once transmits the search code data including the area code and after that, transmits the search code data including the category data only, thereby easily instructing the Web site search system to search for a Web site belonging to different categories in the same area.

Furthermore, when the search code reception means has received the search code data including the area code only, the search means searches for a Web site having the area code and the previously received category code.

According to the present invention, the information terminal once transmits the search code data including category code and after that, transmits the search code data including the area data only, thereby easily instructing the Web site search system to search for a Web site belonging to different areas in the same category.

Moreover, in the first and second embodiments, setting screen data transmission means is provided for transmitting a data of a search code setting screen having an area code setting block for setting the area code only to the information terminal.

According to the present invention, the information terminal connected to the Internet search system via Internet is caused to display a search code setting screen for utilizing the internet search system. Moreover, the user of the information terminal can easily modify the area code setting alone by operating the area code setting block.

Moreover, in the first and second embodiment, an area which can be set as the area code can be classified into a plurality of area levels in accordance with a section size, and the area code setting block has an area level specifying block specifying the area level of the area which can be set as the area code.

According to the present invention, the user of the information terminal can easily enlarge or reduce the search area by operating the area level specifying block.

Moreover, in the first and second embodiments, the area level specifying block has an area level enlargement block for one stage enlarging the area level and an area level reduction block for one stage reducing the area level, when the area level is one stage enlarged by the area level enlargement block, the area level containing the area specified as the area code immediately before it is set as a new area code of one stage larger area, and when the area level is one stage reduced by the area level reduction block, the area level contained in the area specified as the area code immediately before it displays a list of area names of a one-stage smaller level to permit setting the area code in the displayed areas.

According to the present invention, the user of the information terminal can operate the area level enlargement block so as to immediately enlarge the search area to the adjacent peripheral area, and can operate the area level reduction block so as to easily select the search area to be reduced.

Moreover, the first and second embodiments are characterized in that the area level specifying block having an identical area level setting block for displaying an area which is included in an area including the area set as the area code immediately before it and having the area level one step wider than that of the area, and has an area level same as the area set as the area code immediately before it, and for enabling one of the displayed areas to be set as the area code.

According to the present invention, the user of the information terminal can set the area code while selecting a search area in adjacent areas. Accordingly, when no Web site is found at the area desired, it is possible to search for a Web site in an area near to the desired area.

Moreover, the first and second embodiments are characterized by further comprising a plurality of display control means for transmitting a control data for displaying the display control means transmits control data for displaying a new setting screen of the search code where the area specified by the area code is set, together with the search code setting screen which has been displayed, to the information terminal, on receiving the area code set by the identical area level setting block.

According to the present invention, it is possible to simultaneously display the search code setting screen for each of the plurality of areas contained in the same area and having the identical area level. Accordingly, the user of the information terminal can compare Web site information of different areas of an identical area level.

Moreover, the first and second embodiments are characterized in the area level specifying block having a map display block for displaying a map of the area set as the area code immediately before it, and areas being included in the area and having an area level one step narrower than that of the area on the map, and for enabling each of the area displayed on the map to be set as the area code

According to the present invention, the user of the information terminal can visually understand positional relationship between the areas to be searched. Even when the user is not accustomed to the search area, the user can easily set an area in proximity as the area code.

Moreover, in the first and second embodiment, the information terminal fetches a data of the search code setting screen having the area code setting block for setting the area code only, from built-in storage means or a removable storage medium.

According to the present invention, even when the information terminal is not connected to the Internet search system, it is possible to display the search code setting screen on the information terminal. Accordingly, in the off line state, it is possible to show the user of the information terminal how to use the internet search system, prompting use of the Internet search system.

Moreover, in the first and second embodiments, the search means selectively performs an area level limit search for searching a Web site having the area code and the category code when the search code data is received by the search code reception means, and an entire area level search for setting, as the area codes, the area set by the area code and the areas of a lower area level than the areas contained in this area and for searching a Web site having one of the area codes and the category code, and the search code setting screen has a search mode selection block for selecting the execution of one of the area level limit search and the entire area level search.

According to the present invention, the user of the information terminal selects the area level limit search when he/she only wants to get information common to the entire area set as the area code on the search code setting screen, and selects the entire area level search when he/she also wants to get information related to a limited area contained in the area. Thus, the user can effectively search for a Web site according to his/her intention.

Moreover, in the first and second embodiments, a data region is assigned for each area which can be set as the area code, each area is classified into a plurality of area levels in accordance with an area section size, the data region assigned for each area stores a Web site information data for associating with the area assigned, an upper pointer data indicating a data region assigned for an area of one stage wider region containing the area, and a lower pointer data indicating a data region assigned for an area of one stage narrower area contained in the region, thereby constituting a usable Web site search database, and the search means uses the Web site search database for searching for the Web site to search the Web site.

According to the present invention, when an area is set as the area code and the search means uses the Web site search database to refer to a data area assigned to the area and to thereby search an information data of the Web site stored in the area, the search means can refer to the upper pointer data stored in the data area to access a data area in which the area level including the above area is assigned to an one stage wider region, and the search means can refer to the lower pointer data to access a data in which the area level included in the above area is assigned to a one stage narrower region. Therefore, in a case where the Web site is searched using the area code as a search code, the enlargement and reduction of the range of the area to be searched can easily be carried out in a short period of time

Next, the third embodiment of the present invention is a database storage device for searching for a Web site by using an area code specifying an area as a search code, wherein a data region is assigned for each area that can be set as the area code, each of the regions are classified into a plurality of area levels in accordance with an area section size, a data region assigned for each of the regions stores a Web site information data associated with the area, an upper pointer data indicating a data area assigned for a one stage wider area of the area level including the area, and a lower pointer data indicating a data area assigned for one stage narrower area of the area level contained in the area.

According to the present invention, when an area is set as the area code and a data region assigned for this area is referenced to search for information data of the Web site stored in the region, by referencing the upper pointer data stored in the data region, it is possible to access a data region assigned for one stage wider area of the area level including the above area. Moreover, by referencing the lower pointer data, it is possible to access data assigned for one stage narrower area of the area level contained in that region. Accordingly, when searching for a Web site using the area code as the search code, it is possible to easily enlarge and reduce the area range to be searched in a short time.

### BRIEF DESCRIPTION OF THE DRAWINGS

Fig. 1 shows utilization of a Web site search system.
Fig. 2 shows configuration of search database shown in Fig. 1.
Fig. 3 shows a setting screen of the search code displayed on the information terminal shown in Fig. 1.
Fig. 4 shows another setting screen of the search code displayed on the information terminal shown in Fig. 1.
Fig. 5 shows yet another setting screen of the search code displayed on the information terminal shown in Fig. 1.
Fig. 6 shows still another setting screen of the search code displayed on the information terminal shown in Fig. 1.

### BEST MODE FOR CARRYING OUT THE INVENTION

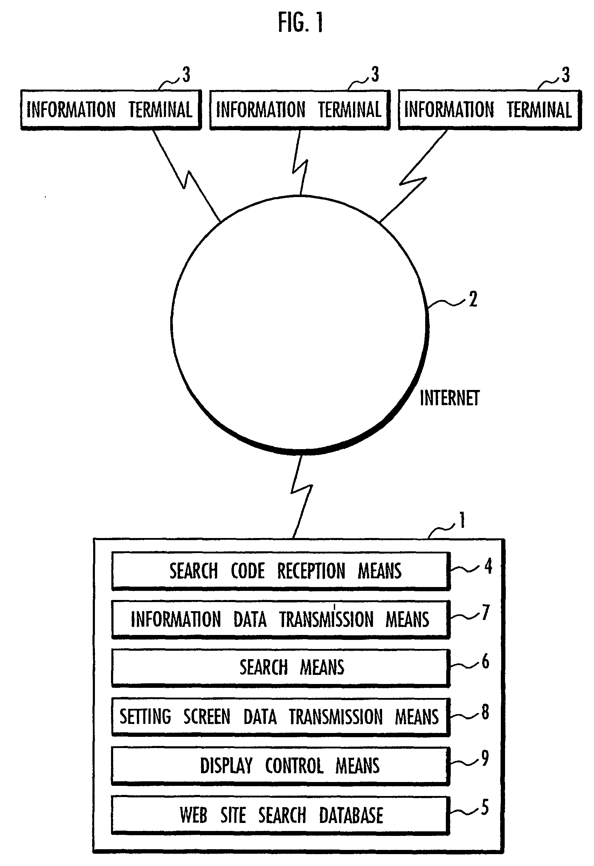

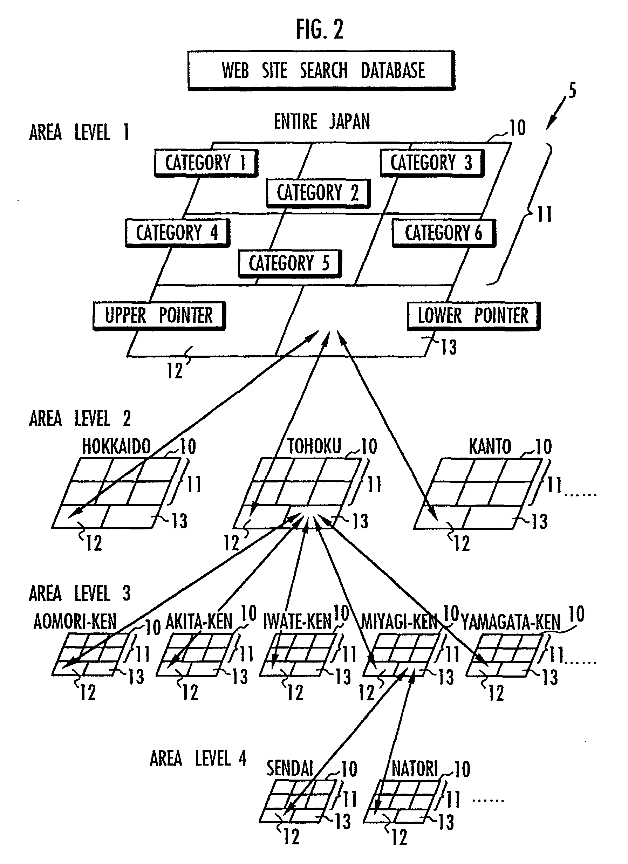

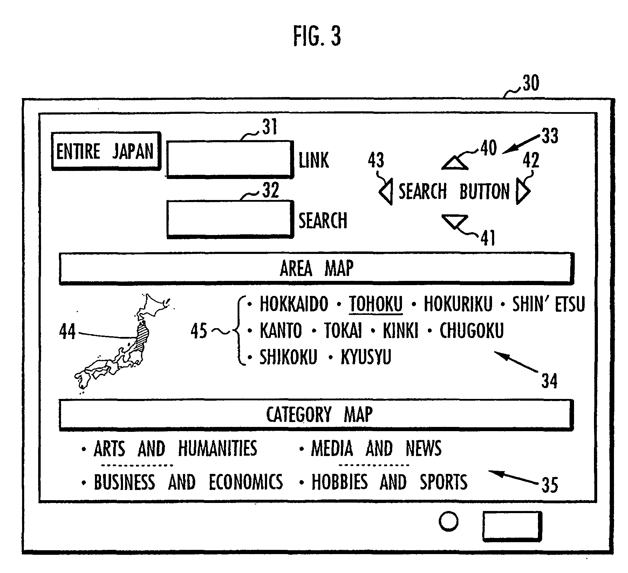

Explanation will be given on an embodiment of the present invention with reference to Fig. 1 to Fig. 6. Fig. 1 shows utilization of a Web site search system. Fig. 2 shows configuration of search database shown in Fig. 1. Fig. 3 to Fig. 6 show setting screens of the search code displayed on the information terminal shown in Fig. 1.

Referring to Fig. 1, the Web site search system 1 according to the present invention is connected via the Internet 2 to an information terminal 3 such as a personal computer and a PDA. The Web site search system 1 searches for a Web site having a search code for searching the Web site transmitted from the information terminal 3 and transmits the searched Web site information (such as URL) to the information terminal 3.

The Web site search system 1 includes: search code receiving means 4 for receiving a search code data including a search code transmitted from the information terminal 3; a Web site search database 5 for searching for a Web site having a search code included in the search code data received; search means 6 for retrieving a Web site by using the Web site search database 5; information data transmission means 7 for transmitting searched Web site information to the information terminal 3; and display control means 9 for transmitting a control signal for displaying a plurality of search code setting screens for the information terminal 3. It should be noted that a storage device (not depicted) containing the Web site search database 5 corresponds to a storage device of the Web site search database according to the present invention.

The search code data includes at least one of an area code specifying an area and a category code specifying other than an area. And as the category code, a field is specified in connection with an area when searching for a Web site (for example, arts and humanities, business and economics, computer and Internet, education, entertainment, politics, health and medicine, media and news, hobbies and sports, various data and information sources, and the like).

Moreover, in the Web site search database 5, as shown in Fig. 2, the area that can be set as an area code is categorized in several stages according to the width of the area: a widest area level 1 (entire Japan), a next wider area level 2 (Hokkaido, Tohoku, Hokuriku, Shin'etsu, Kanto, Tokai, Kinki, Chugoku, Shikoku, Kyusyu), a next wider area level 3 (Aomori, Akita, and other prefectures), and the data area 10 is assigned for each area.

Each data area 10 includes: Web site information data 11 (such as URL) associated with various categories (category 1 to category 6 in the figure); upper position pointer data 12 indicating an address of a data area assigned to an area of a one-step wider level including the area where the data area is assigned; and a lower position pointer data 13 indicating a data area assigned at a one-step narrower area level contained in the region.

For example, the upper position pointer data 12 of the data area 10 assigned for Tohoku indicates an area level including Tohoku as the data area 10 assigned for the entire Japan, a one-step wider level. Moreover, the lower position pointer data 13 indicates data area 10 assigned for the area level included in Tohoku as a one-step narrower area level, i.e., Aomori-ken, Akita-ken, Iwate-ken, Miyagi-ken, Yamagata-ken, Fukushima-ken(not depicted).

Thus, the data area 10 assigned for each area is sandwiched by the upper position pointer data 12 and the lower position pointer data 13, i.e., the data area 10 of a one-step wider area level including the area and the data area 10 of a one-step narrower area level contained in this area. The search means 6 can easily modify the area level by referencing the upper position pointer data 12 and the lower position pointer data 13.

Moreover, in the Web site search database 5 shown in Fig. 2, it is quite easy to extract a Web site having a particular area as a search code. For example, it is possible to extract a Web site having "Sendai-city" of an area level 4 as the search code and transmit information data characteristic of Sendai-city (such as event information and advertisement) together with the Web site information to the information terminal 3 which has accessed the Web site.

Moreover, for an advertiser to provide a banner advertisement on a Web site, it is possible to select an area belonging to his commercial area and provide a banner advertisement for the Web sites contained in the information data 11 of the data area 10 assigned for the area, thereby providing the banner advertisement only to the Web sites accessed with an area code of this commercial area. Accordingly, the advertiser need not provide his advertisement in an unnecessarily wide range and can suppress the advertisement fee, thereby effectively providing the banner advertisement.

In this case, for the reader of the Web site, it is possible to see a more useful banner advertisement associated with the area as a search object.

Moreover, the search means 6 starts retrieval of the Web site upon reception of a search code data by the search code reception means 4. When the received search code data includes both of an area code and a category code, a Web site having the area code and the category code is searched.

On the other hand, when the received search code includes the area code only, the search means 6 retrieves a Web site having the area code and a category code received previous time. For this, the information terminal 3 transmits a category code once to the Web site search system. After this, only by transmitting an area code, while maintaining the category as an object, it is possible to search for a Web site only by modifying an area as an object.

Moreover, when the search code received by the search code reception means 4 includes a category code only, the search means 6 searches for a Web site having the category code and an area code received previous time. For this, the information terminal 3 transmits once area code to the Web site search system 1. After this, by transmitting a category code only, while maintaining an area as an object, it is possible to search for a Web site only by modifying the category as an object.

Moreover, when the search means 6 has received an area code according to the specification from the information terminal 3 referencing Fig. 2, the search means 6 selectively performs an area level limited search and an entire area level search. The former searches for a Web site only from the Web site data stored in the information data 11 of the data area 10 assigned to the area as the area code. The latter searches for a Web site from all the Web site data stored in the information data 11 of the data area 10 assigned to the area as a area code and an area narrower than the area level.

For example, when Tohoku is assigned as an area code and the area level limited search is performed, the Web site is searched only from Web site data stored in the information data 11 of the data area 10 assigned for Tohoku. On the other hand, when the entire area level search is performed, the Web site is searched for not only from the data area 11 assigned for Tohoku, but also from the Web site data stored in the information data 11 of the data area 10 assigned for Aormori-ken, Akita-ken, Iwate-ken, Miyagi-ken, Yamagata-ken contained in Tohoku and further narrower areas contained in these.

Thus, by selecting the area level limited search and the entire area level search, the user of the information terminal 3 can search for a Web site by limiting the area level according to the purpose.

Next, referring to Fig 3 to Fig. 5, explanation will be given on the Web site search operation at the information terminal 3. When the information terminal 3 is connected via the Internet to the Web site search system 1, the setting screen transmission means 8 provided on the Web site search system 1 transmits search code setting screen data to the information terminal 3. A display 30 of the information terminal 3 displays an initial screen of the search code setting screen shown in Fig. 3.

The search code setting screen is for the user of the information terminal 3 to enter a search code for searching for a Web site and includes: a link input block 31 for setting a search code by entering characters; a search input block 32; a search button 33 for setting a search code by operation of a pointing device such as a mouse; an area map 34; and a category map 35.

The user of the information terminal 3 can set an area code for setting an area on the search code setting screen and a category code for setting category other than area. In the link input block 31 and the search input block 32, it is possible to enter an area code and the category code. When a search code is entered into the link input block 31, the information terminal 3 transmits to the Web site search system 1, a search code data according to the search code and data specifying Web site search by the area level limited search. On the other hand, when a search code is entered into the search input block 32, the information terminal 3 transmits to the Web site search system 1, a search code data according to the search code and data specifying to perform Web site search by the entire area search.

Thus, the user of the information terminal 3 can select the area level limited search or the entire area level search for performing Web site search. It should be noted that the link input block 31 and the search input block 32 constitute the search mode selection block of the present invention.

The search button 33 (corresponding to an area level specification block of the present invention) and the area map 34 for specifying the area code only and corresponds to the area code setting block of the present invention. The search button 33 is composed of: an upper button 40 (corresponding to an area level enlargement instruction of the present invention) for a one-step spreading area level which can be set as a an area code; a lower button 41 (corresponding to an area level reduction instruction of the present invention) for one-step narrowing an area level which can be set as an area code; a right button 42 (corresponding to the identical area level setting block of the present invention) by which an area level in which the area level including the area set as the area code at present is contained in a one-step wider area can select the identical area; and a left button 43 (corresponding to the identical area level setting block of the present invention). Moreover, the area map 34 includes a map display block 44 displaying a map of an area specified as an area code (Tohoku in this case) and a lower level area 45 display block showing a list of areas of a one-step narrower area level (constituting an area level specifying bock of the present invention).

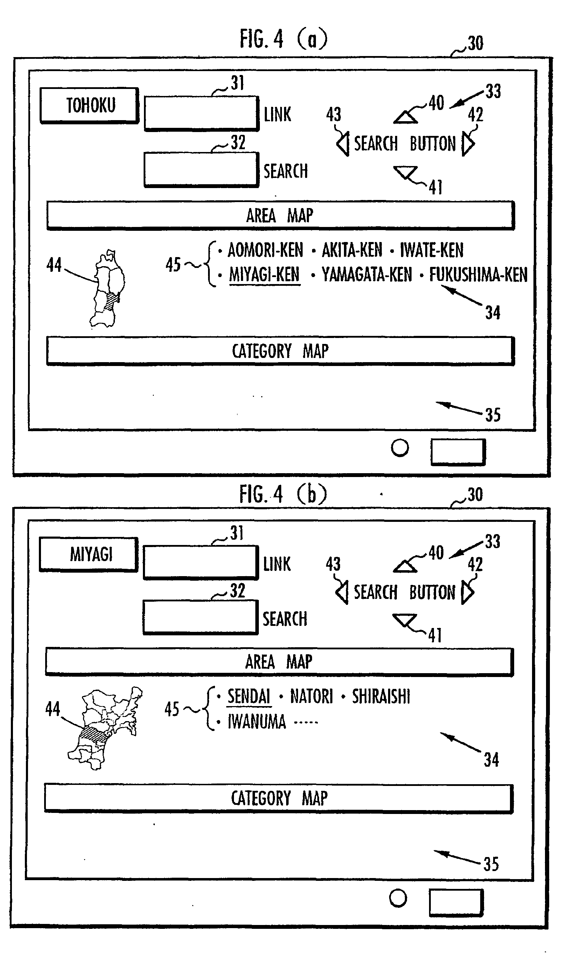

For example, on the search code setting screen of Tohoku (the area level 2) shown in Fig. 4A, the user selects by point operation Miyagi-ken on the map display block 44 of the area map 34 or the lower level area display block 45 (display of Miyagi-ken is highlighted in the map block 44 and the Miyagi-ken in the lower level area display block 45 is underlined), or operates the lower switch 41 to select an area displayed in the lower level area display block 45 (the area selected is switched from one to another each time the lower switch 41 is operated). The search code setting screen is switched to Miyagi-level (the area level 3) shown in Fig. 4B, and "Miyagi-ken" is transmitted to the Web site search system 1 as an area code.

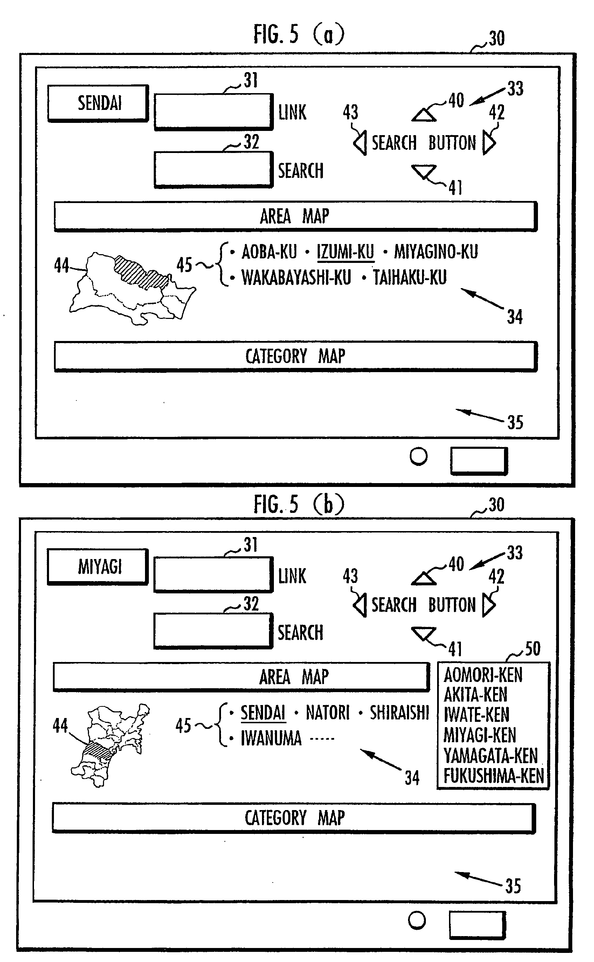

Similarly, on the search code setting screen of the Miyagi-level shown in Fig. 4B, if the user selects Sendai among one-step narrower areas, the search code setting screen is switched to the Sendai-level (the area level 4) shown in Fig. 5A, and "Sendai" is transmitted as an area code to the Web site search system 1.

Moreover, when the upper switch 40 is point-operated on the search code setting screen of Sendai-level (the area level 4) shown in Fig. 5A, the area level including Sendai is switched to the search code setting screen of Miyagi-ken-level (the area level 3) shown in Fig. 4B an "Miyagi-ken" is transmitted as an area code to the Web site search system 1.

Similarly, when the upper switch 40 is point-operated on the search code setting screen of the Miyagi-ken-level (the area level 3) shown in Fig. 4B, the area level including Miyagi-ken is switched to the search code setting screen of Tohoku-level (the area level 2) and "Tohoku" is transmitted from the information terminal 3 as an area code to the Web site search system 1.

Thus, the user of the information terminal 3 can operate the upper switch 40, the lower switch 41, the map display block 44, and the lower level area display block 45, thereby one-level spreading and reducing the area level to be searched. According to this, a search code data including an area code only is transmitted from the information terminal 3 to the Web site search system 1.

As has been described above, when the search means 6 of the Web site search system 1 has received a search code data including the area code only, in order to retrieve the Web site having this area code and the category code received previous time and accordingly, the user of the information terminal 3 can modify the search area alone without entering the category code. Thus, it is possible to search for a Web site while enlarging and reducing the area level.

Next, when the user of the information terminal 3 operates the right switch 42, as shown in Fig. 5B, an identical level area display block 50 is displayed which displays a list of areas of an identical area level as the area (Miyagi-ken) set and included in one-step wider range (Tohoku in this example) including an area set as the category code (Miyagi-ken in this example). Each time the user points the right switch 42, the area code is switched one to another in the identical area level (Aomori-ken - Akita-ken - Iwate-ken - ...) and the area code switched is transmitted to the Web site search system 1. Thus, the user can easily search for the Web site in the vicinity of the local area.

Moreover, when the user points the left key 43, in the same way as operating the right key 42, it is possible to select an area of an identical area level as shown in Fig. 5B. When a new area is set, the information terminal 3, by the operation of the left key 43, transmits the data indicating that a new area code has been set, to the Web site search system 1.

Upon reception of this data, the Web site search system 1, by using the display control means 9, while displaying the search code setting screen for the area which has been set, transmits to the information terminal 3 control data for displaying a search code setting screen of the new area set. That is, the control data transmitted enables a search code setting screen of a plurality of areas having an identical area level to be simultaneously displayed on the display screen 30. Thus, the user of the information terminal 3 can have Web site information by comparing information of a plurality of adjacent areas.

Moreover, when the user of the information terminal 3 has entered a category code only into the link input block 31 or the search input block 32 of the search code setting screen and when user has selected the category by point-operating the category map 35, the information terminal 3 transmits a search code data including category data only to the Web site search system 1. In this case, as has been described above, the search means 6 of the Web site search system 1 searches for the Web site having the category code received and the area code received previous time. Accordingly, the user of the information terminal 3 can easily search for a Web site only by modifying the category while maintaining the area specification.

It should be noted that in the present embodiment, explanation has been given on the Web site search system 1 having a Web site search database 5. However, it is also possible not to have the Web site search database 5 and utilize via a network a Web site search database provided at other position.

Moreover, in this embodiment, the Web site search system 1 transmits data of search code setting screen to the information terminal 3. However, it is also possible that built-in storage means of the information terminal 3 such as a hard disc and removable storage means such as CD ROM stores the display data of the search code setting screen and with this display data it is possible to display the search code setting screen.

Moreover, in the resent embodiment, the area level specification block of the present invention includes the search button 33, the map display block 44, and the lower level area display block 45. By providing at least one of them, it is possible to obtain the effect of the present invention.

Moreover, instead of providing the search button 33, the area display block 44, and the lower level area display block 45, by providing the link input block 31 or the search input block 32, and by entering an area only or a category in the link input block 31 or the search input block 32, it is possible to obtain the effect of the present invention.

Moreover, in the present embodiment, by constituting Web site search database with the configuration shown in Fig. 2, it becomes easier to enlarge and reduce the area level to be set as an area code. The effect of the present invention can also be obtained when the Web site search database is made with other configuration.

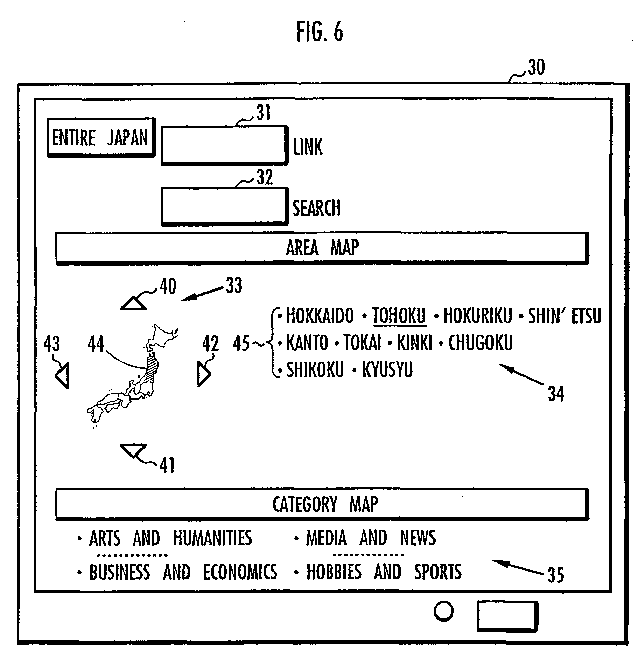

Moreover, as shown in Fig. 6, the upper button 40, the lower button 41, the right button 42, and the left button 43 of the search button 33 may be positioned at four corners of the map display block. In this case, area code setting blocks are concentrated and this can improve the operation capability of the user of the information terminal 3.

### INDUSTRIAL APPLICABILITY

The Web site search system of the present invention can be utilized for a search engine system for opening a Web page for Web site search and displaying a Web site associated with a search keyword entered via the Web page by a reader.

## Claims

1. A Web site search system comprising:
search code reception means for receiving a search code data containing at least one of an area code specifying an area or a category code specifying other than the area as a Web site search code from an information terminal connected via Internet; search means for starting a Web site search upon reception of the search code data by the search code reception means, and when the search code data including both of the area code and the category code is received, searching for a Web site having the received area code and category code, and when the search code data including the area code only is received, searching for a Web site having the area code and the category code previously received; and information data transmission means for transmitting Web site information data searched by the search means to the information terminal.

2. A Web site search system comprising:
search code reception means for receiving a search code data containing at least one of an area code specifying an area and a category code specifying other than the area as a Web site search code from an information terminal connected via Internet;
search means for starting a Web site search upon reception of the search code data by the search code reception means, and when the search code data including both of the area code and the category code is received, searching for a Web sites having the received area code and category code, and when the search code data including the category code only is received, searching for a Web site having the category code and the previously received area code; and
information data transmission means for transmitting a Web site information data searched by the search means to the information terminal.

3. A Web site search system according to claim 2, wherein when the search code reception means has received the search code data including the area code only, the search means searches for a Web site having the area code and the previously received category code.

4. A Web site search system according to any one of claims 1 to 3, further comprising setting screen data transmission means for transmitting a data of a search code setting screen having an area code setting block for setting the area code only to the information terminal.

5. A Web site search system according to claim 4, wherein an area which can be set as the area code can be classified into a plurality of area levels in accordance with a section size, and
the area code setting block has an area level specifying block for specifying the area level of the area which can be set as the area code.

6. A Web site search system according to claim 5, wherein the area level specifying block has an area level enlargement block for one stage enlarging the area level and an area level reduction block for one stage reducing the area level; and
when the area level is one stage enlarged by the area level enlargement block, the area level containing the area specified as the area code immediately before it is set as a new area code of one stage larger area; and when the area level is one stage reduced by the area level reduction block, the area level contained in the area specified as the area code immediately before it displays a list of area names of a one-stage smaller level to permit setting the area code in the displayed areas.

7. A Web site search system according to claim 6, wherein the area level specifying block has an identical area level setting block for displaying an area which is included in an area including the area set as the area code immediately before it and having the area level one step wider than that of the area, and has an area level same as the area set as the area code immediately before it, and for enabling one of the displayed areas to be set as the area code.

8. A Web site search system according to claim 7, further comprising a plurality of display control means for transmitting a control data for displaying a new setting screen of the search code where the area specified by the area code is set, together with the search code setting screen which has been displayed, to the information terminal, on receiving the area code set by the identical area level setting bock.

9. A Web site search system according to claim 5, wherein the area level specifying block has a map display block for displaying a map of the area set as the area code immediately before it, and areas being included in the area and having an area level one step narrower than that of the area on the map, and for enabling each of the area displayed on the map to be set as the area code.

10. A Web site search system according to any one of claims 1 to 3, wherein the information terminal fetches a data of the search code setting screen having the area code setting block for setting the area code only, from built-in storage means or a removable storage medium.

11. A Web site search system according to any one of claims 1 to 3, wherein the search means selectively performs an area level limit search for searching a Web site code data is received by the search code reception means, and an entire area level search for setting, as the area codes, the area set by the area code and the areas of a lower area level than the areas contained in this area and for searching a Web site having one of the area codes and the category code; and
the search code setting screen has a search mode selection block for selecting the execution of one of the area level limit search and the entire area level search.

12. A Web site search system according to any one of claims 1 to 3, wherein a Web site search database constructed so that a data region is assigned for each area which can be set as the area code; each area is classified into a plurality of area levels in accordance with an area section size; the data region assigned for each area stores a Web site information data for associating with the area assigned, an upper pointer data indicating a data region assigned for an area of one stage wider region containing the area, and a lower pointer data indicating a data region assigned for an area of one stage narrower area contained in the region; and
the search means uses the Web site search database for searching for the Web site to search the Web site.

13. A database storage device for searching for a Web site by using an area code specifying an area as a search code, wherein
a data region is assigned for each area that can be set as the area code; each of the regions are classified into a plurality of area levels in accordance with an area section size;
a data region assigned for each of the regions stores a Web site information data associated with the area, an upper pointer data indicating a data area assigned for a one stage wider area of the area level including the area, and a lower pointer data indicating a data area assigned for one stage narrower area of the area level contained in the area.
